**Europäisches Patentamt**

**European Patent Office**

**Office européen des brevets**

(19)

(11) Numéro de publication: **0 230 847**
**B1**

# FASCICULE DE BREVET EUROPEEN

(12)

(45) Date de publication du fascicule du brevet:
05.09.90

(51) Int. Cl.⁵: **H04L 12/54, H04L 12/58**

(21) Numéro de dépôt: 86460024.2

(22) Date de dépôt: 09.12.86

(54) **Système de commutation de multiplex de paquets.**

(30) Priorité: **27.12.85 FR 8519453**

(43) Date de publication de la demande:
05.08.87 Bulletin 87/32

(45) Mention de la délivrance du brevet:
05.09.90 Bulletin 90/36

(84) Etats contractants désignés:
**DE GB IT**

(56) Documents cités:
**EP-A- 0 014 152**
**EP-A- 0 113 639**
**US-A- 3 979 733**
**US-A- 4 218 756**

**PROCEEDINGS OF THE INTERNATIONAL SWITCHING**
**SYMPOSIUM, session 32 C,**
**paper 2, 7 - 11 mai 1984, Florence, IT,**
**pages 1-7, Amsterdam, NL; A. THOMAS et al.:**
**"Asynchronous time-division techniques: an**
**experimental packet network integrating**
**videocommunication"ng"h adaptive codebook**
**allocation"nels" 000**

(73) Titulaire: **Servel, Michel, Le Rhu en Servel,**
**F-22300 Lannion(FR)**
Titulaire: **Thomas, Alain, 25, rue du Bas Landreau,**
**F-44400 Rèze-les-Nantes(FR)**

(72) Inventeur: **Servel, Michel, Le Rhu en Servel,**
**F-22300 Lannion(FR)**
Inventeur: **Thomas, Alain, 25, rue du Bas Landreau,**
**F-44400 Rèze-les-Nantes(FR)**

(74) Mandataire: **Le Guen, Louis François, CABINET Louis LE**
**GUEN 38, rue Levavasseur B.P. 91, F-35802 Dinard**
**Cédex(FR)**

ACTORUM AG

## Description

La présente invention concerne un système de commutation de multiplex de paquets de longueur fixe synchrones.

A titre d'exemple, un multiplex de paquets de longueur fixe synchrones est décrit dans le document EP-A-0 108 028.

Un système de commutation de multiplex de paquets de longueur fixe synchrones est déjà décrit dans le document FR-A-2 538 976. Dans ce système les paquets sont considérés comme des intervalles de temps à adressage explicite, ce qui permet d'y utiliser des fonctions existantes dans les commutateurs temporels de circuits à commande par la sortie. La fonction commutation de paquets consiste essentiellement à associer à chaque paquet entrant, identifié par son numéro de multiplex entrant parmi plusieurs et son étiquette, une nouvelle identification elle-même caractérisée par deux attributs de même type, c'est-à-dire une nouvelle étiquette et le numéro du multiplex sortant parmi plusieurs qui va délivrer le paquet. Sous une autre forme, on commute le paquet (e, i) où $\underline{e}$ est le numéro du multiplex entrant et $\underline{i}$ l'étiquette, en un paquet sortant (s, j), où $\underline{s}$ est le numéro du multiplex sortant et $\underline{j}$ la nouvelle étiquette.

Dans cette commutation de paquets, une première action est entreprise sur le paquet (e, i) avant son rangement dans la mémoire tampon, cette action consistant en une "conversion d'étiquette" qui correspond à une permutation d'intervalle de temps en commutation temporelle de circuits. Cette conversion est effectuée par une mémoire de commande, qui a été programmée lors de l'établissement de la communication par paquets. Ainsi, l'étiquette $\underline{i}$ est remplacée par l'étiquette $\underline{j}$. Le paquet (e, j) est alors rangé dans la mémoire tampon à une adresse connue, fonction de l'instant d'écriture défini par $\underline{e}$. Cette adresse est stockée dans une file d'attente associée au multiplex sortant $\underline{s}$. Comme le système est commandé par la sortie, au cours du cycle d'exploration des multiplex sortant, la file d'attente associée au multiplex sortant $\underline{s}$ est explorée pour délivrer l'adresse du prochain paquet que le multiplex sortant $\underline{s}$ aura à porter. Comme en commutation temporelle de circuits, l'information formant le paquet est rangée dans la mémoire tampon.

Plus particulièrement, dans ce système, la mise en parallèle de chaque paquet complet est effectuée avant l'écriture en mémoire tampon. Les paquets entrant ont d'abord leurs octets convertis en parallèle, puis transitent dans des mémoires servant de files d'attente qui sont réalisées au moyen de mémoires FiFo ou "premier entré - premier sorti.

La conversion classique série-parallèle des files d'octets parallèles est remplacée par une succession de permutations simultanées d'octets parallèles pour l'ensemble des multiplex entrants et une autre succession de permutations simultanées d'octets parallèles pour l'ensemble des multiplex sortants. La logique de commande, qui comprend la seule mémoire de commande, n'étant capable d'analyser qu'une seule étiquette par temps d'octet, il est prévu que les étiquettes des différents paquets s'enchaînent de manière temporellement décalée. Ceci est obtenu en assurant dans les files d'attente d'entrée un déphasage temporel de 1 octet d'une file à la suivante. Une matrice de rotation permet d'effectuer une rotation commandable sur des groupes de n octets. L'ordre de la rotation progresse d'un pas à chaque "temps d'octet". En sortie de la matrice de rotation, les informations se présentent sous une forme dite "parallèle-diagonale". Les informations sont rangées sous cette forme dans la mémoire tampon. Le convertisseur parallèle-série est lui-même formé d'une matrice de rotation à commande cyclique effectuant les décalages dans le sens inverse de la matrice d'entrée.

Dans les exemples de réalisation du système de commutation décrit ci-dessus, on a, plus particulièrement, considéré le cas où le nombre d'octets par paquet, c'est-à-dire par intervalle de temps, est égal à une puissance de 2 et, encore plus particulièrement, un nombre d'octets par paquet égal à seize. Chaque paquet de ce type est constitué d'un en-tête, occupant un octet, suivi de quinze octets d'information. Or, dans certaines utilisations, il est préférable que le nombre des octets d'information soit une puissance de 2.

Un objet de l'invention consiste à prévoir un système de commutation de multiplex de paquets de longueur fixe synchrones, dont le nombre de multiplets d'information est égal à une puissance de 2. En pratique, bien que cet exemple ne soit pas limitatif, les paquets sont constitués d'un en-tête, occupant un octet, suivi de $2^4$ ou seize octets.

Suivant une caractéristique de l'invention, il est prévu un système de commutation de multiplex à intervalles de temps contenant des paquets de longueur fixe provenant d'une pluralité de n jonctions entrantes vers une pluralité de n jonctions sortantes, chaque paquet entrant ou sortant comportant un en-tête plus n mots, le système comprenant:

- des premiers moyens de conversion transformant les paquets série d'une pluralité de multiplex entrants, en paquets parallèles,

- des moyens pour transmettre, aux entrées d'adresse d'une mémoire de commande, programmable à accès aléatoire, l'en-tête et l'identification de la jonction entrante d'origine de chaque paquet entrant, la sortie de données de ladite mémoire de commande délivrant un nouvel en-tête traduit affecté au paquet entrant parallèle en substitution de l'en-tête d'origine de manière à former, avec les n mots restants du paquet entrant, le paquet parallèle sortant,

- une mémoire tampon activée cycliquement en écriture, pour mémoriser les paquets sortants,

- des seconds moyens de conversion transformant chaque paquet parallèle sortant, lu dans la mémoire tampon, en un paquet série affecté au(x) multiplex destinataire(s),

- une pluralité de moyens pour mémoriser les adresses des paquets qui sont présents dans la mémoire tampon, lesdits moyens étant validés sélectivement en écriture, en fonction d'une information fournie également par d'autres sorties de données de la mémoire de commande, chacun des moyens de mémorisation étant affecté de manière univoque à une jonction sortante, et

- des moyens sensibles à un signal indiquant l'activation d'une quelconque des jonctions sortantes pour lire l'adresse contenue dans le moyen de mémorisation correspondant, de manière à retrouver, dans la mémoire tampon, le paquet sortant destiné à ladite jonction, le système comprenant encore:

- une base de temps fonctionnant à un rythme double du débit mot des multiplex et délivrant n trames cycliques de 2n intervalles de temps chacune, chaque trame étant décalée de deux intervalles de temps par rapport à la précédente, chaque jonction entrante étant associée à une trame cyclique parmi n et chaque jonction sortante étant associée à une trame cyclique parmi n, le premier temps de chaque trame validant les moyens pour transmettre l'en-tête de la jonction entrante associée aux entrées d'adresse de la mémoire de commande dont la sortie de données est reliée à la première mémoire élémentaire de la mémoire tampon, les intervalles de temps suivants de rangs pairs validant successivement les entrées des n dernières mémoires élémentaires de la mémoire tampon, le premier intervalle de temps d'une trame validant la liaison entre la sortie de la première mémoire élémentaire et les seconds moyens de conversion vers la jonction sortante associée à ladite trame et les intervalles de temps suivants de rangs pairs validant les liaisons entre les sorties des n dernières mémoires et les seconds moyens de conversion vers ladite jonction sortante associée.

Suivant une autre caractéristique, la base de temps est formée d'un compteur binaire cyclique à $(K + 2)$ étages, où $2^K$ représente les adresses de paquets de la mémoire tampon et où k est supérieur au logarithme du nombre de jonctions entrantes ou sortantes ($e = log_2 n$), l'entrée d'horloge du compteur étant reliée à une horloge fonctionnant à quatre fois le rythme de débit mot des multiplex, les deux premiers étages délivrant les fréquences à la fréquence double du rythme mot et à la fréquence du rythme mot, les e étages suivants délivrant successivement les identifications des jonctions entrantes et sortantes, les sorties des (e+2) premiers étages étant reliés aux entrées d'un décodeur de valeur nulle dont la sortie est reliée à l'entrée d'initialisation d'un registre à décalage dont l'entrée d'horloge est reliée à l'horloge dont les entrées de chargement sont reliées à une série de potentiels logiques représentant la séquence binaire 1010100-010001...01000, la sortie du dernier étage du registre étant reliée à l'entrée de signal du premier, et les sorties des étages de rangs multiples de quatre délivrant les trames décalées.

Suivant une autre caractéristique, les premiers moyens de conversion comprennent une circuit d'entrée à file d'alignement par jonction entrante, les files d'alignement ayant leurs entrées de référence reliées respectivement aux sorties d'un démultiplexeur dont l'entrée est reliée aux étages d'identification (e) du compteur de la base de temps, les entrées de lecture des files d'alignement étant respectivement reliées aux sorties de trame du registre de la base de temps.

Suivant une autre caractéristique, les sorties des moyens de conversion d'entrée sont, d'une part, reliées aux entrées d'une matrice de rotation à n pas de rotation, n sorties et n entrées, et, d'autre part, aux entrées d'un multiplexeur à n entrées et une sortie qui est reliée à des entrées d'adresse de la mémoire de commande, l'entrée de commande du multiplexeur et de la matrice de rotation étant reliées aux étages d'identification du compteur de la base de temps et l'entrée de validation du multiplexeur étant reliée au premier étage du compteur.

Suivant une autre caractéristique, la sortie de données de la mémoire de commande comporte autant de fils que de bits par en-tête et n fils respectivement reliés aux entrées d'écriture de n files d'adresses correspondant respectivement aux n jonctions sortantes, les entrées de données des files d'adresses étant reliées aux étages du compteur.

Suivant une autre caractéristique, la sortie de la première mémoire élémentaire de la mémoire tampon est reliée à un démultiplexeur dont les sorties reliées aux premières entrées de n multiplexeurs dont les secondes entrées sont reliées aux sorties d'une matrice de rotation à n pas de rotation, n sorties et n entrées, dont les entrées sont reliées aux sorties des dernières mémoires élémentaires de la mémoire tampon, les entrées de commande du démultiplexeur et de la matrice de rotation étant reliées par des inverseurs aux étages d'identification du compteur de la base de temps, les entrées de commande des n multiplexeurs étant reliées au second étage du compteur et leurs sorties respectivement reliées aux entrées de données de n files d'attente dont les entrées d'écritures sont respectivement reliées aux sorties de trames du registre de la base de temps, les n files d'attente ayant leurs sorties respectivement reliées aux jonctions de sortie.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

les Figs. 1 et 2, assemblées comme l'indique la Fig. 3, forment le schéma d'une matrice de commutation suivant l'invention,
la Fig. 4 est le schéma de la base de temps utilisée dans la matrice de commutation de la Fig. 1,
les Figs. 5a à 5i sont des diagrammes temporels illustrant les lectures des paquets dans les circuits d'entrée de la matrice de commutation,
les Figs. 6a à 6e sont des diagrammes temporels illustrant les écritures des paquets dans les files de sortie de la matrice de commutation, et
la Fig. 7 est un diagramme illustrant la position des multiplex, sans leurs étiquettes, après passage dans la matrice de rotation d'entrée.

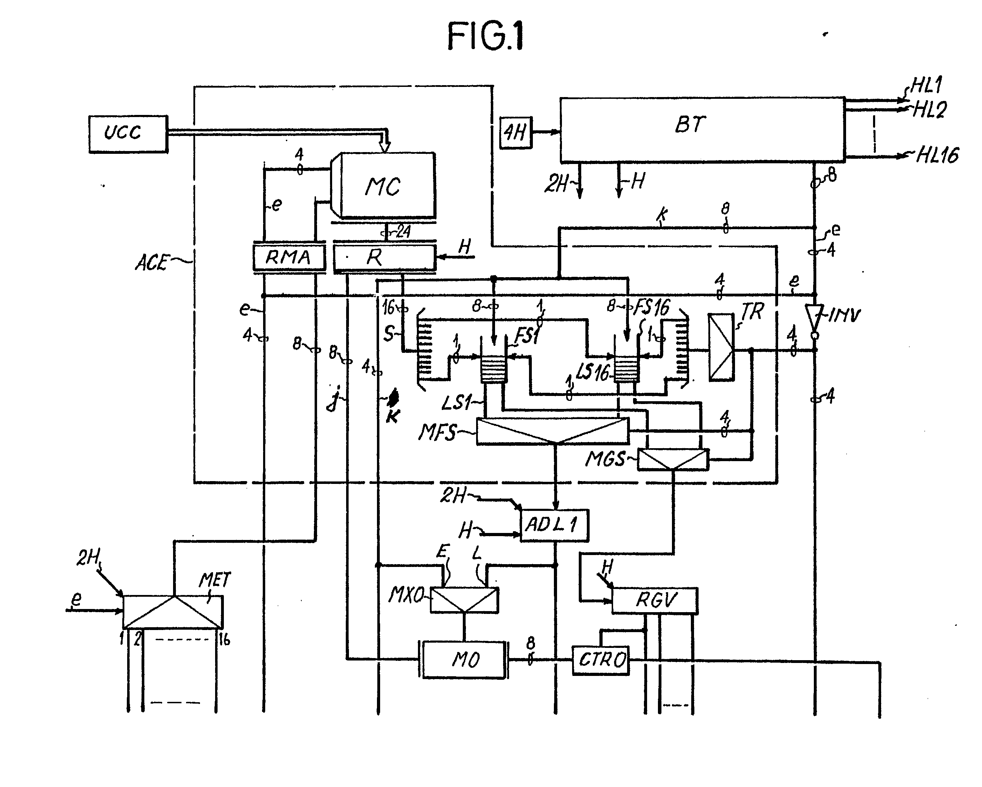

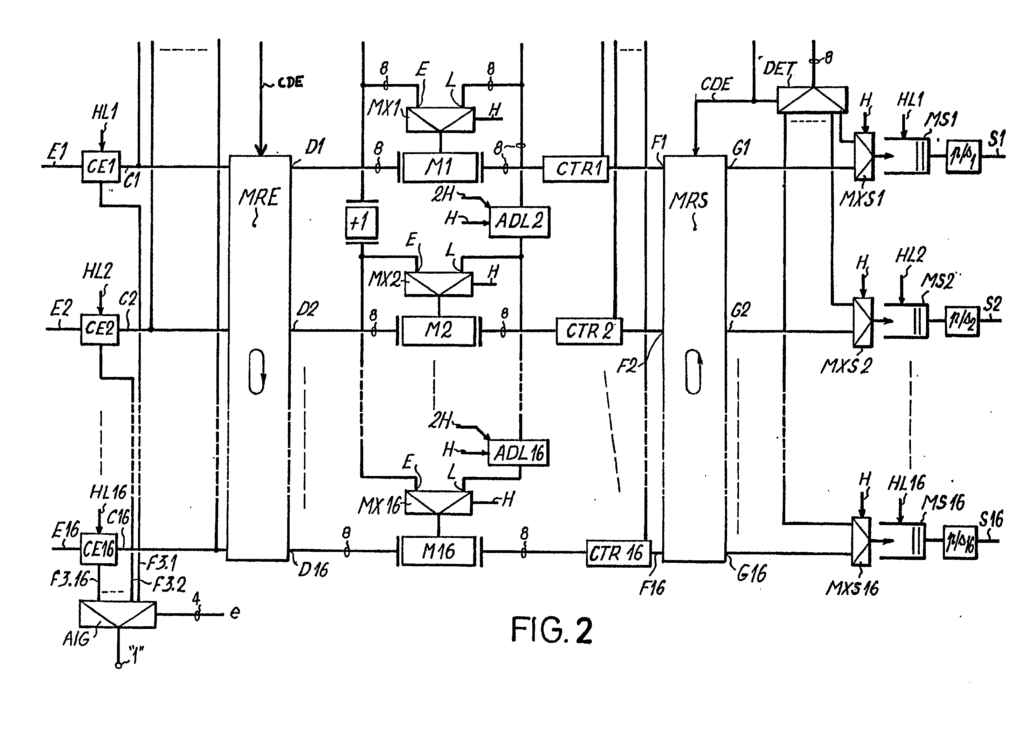

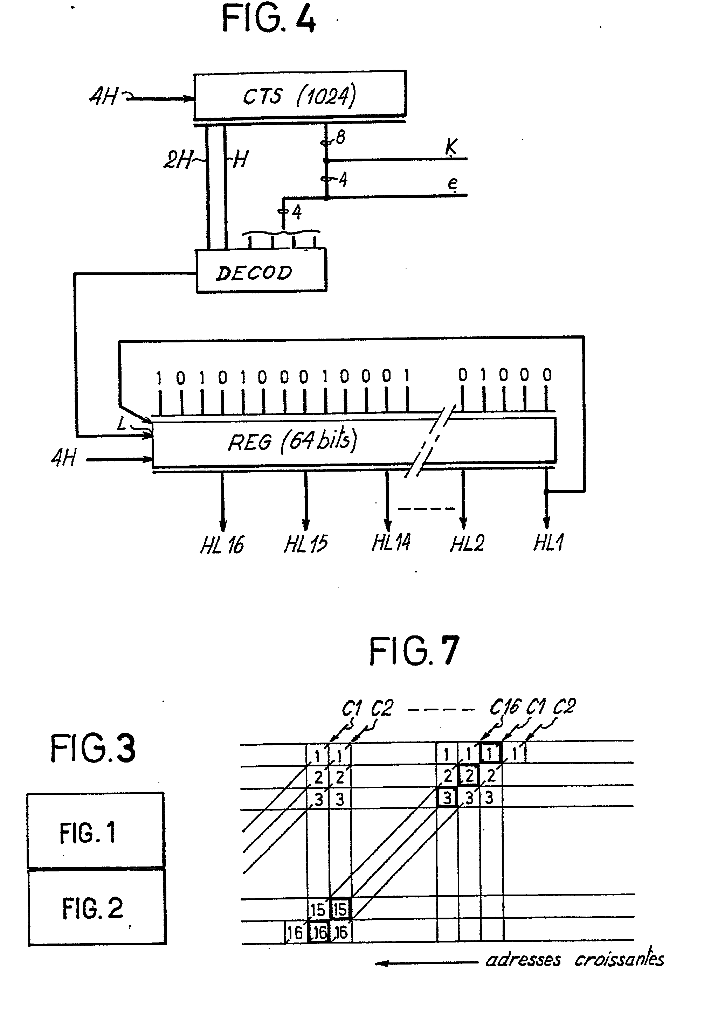

Le bloc-diagramme des Figs. 1 et 2 montre un exemple de réalisation d'une matrice de commutation formant un élément de base d'un commutateur temporel de paquets suivant l'invention. Les paquets arrivant sur les canaux E1 à E16 sont à commuter pour être transmis sur les canaux S1 à S16. Chaque canal d'entrée E1 à E16, transmettant un train binaire, est relié à l'entrée d'un circuit d'entrée CE1 à CE16. Chaque circuit d'entrée CE1 à CE16 se compose d'un convertisseur série-parallèle fonctionnant octet par octet et d'une file d'attente organisés comme le circuit d'entrée montré à la Fig. 2 du document FR-A-2 538 976. On ne donnera donc pas, dans la suite, plus de détails sur ces circuits d'entrée.

Comme les jonctions E1 à E16, Fig. 2, sont reliées à des points d'origine différents, a priori non synchronisés, les étiquettes des paquets qu'elles transportent entrent à des temps d'octets différents dans les files d'attente des circuits d'entrée CE1 à CE16. Donc, initialement, les étiquettes des paquets n'ont aucune raison d'être lues dans un ordre prédéterminé aux sorties de ces files.

L'ensemble des files des circuits CE1 à CE16 sert donc à "aligner" les multiplex. Chaque file doit avoir une taille supérieure à dix-sept mots de neuf bits, puisque l'on considère des paquets de dix-sept mots de huit bits et que, dans la file, un bit est réservé pour indiquer le début d'un paquet. En pratique, les circuits CE1 à CE16 constituent des moyens de décalage dans le temps des multiplex entrants E1 à E16, de façon à ce que les en-têtes des différents multiplex sortant des circuits CE1 à CE16 soient délivrés séquentiellement, suivant un alignement diagonal.

En pratique, l'alignement diagonal des lectures dans les files est obtenu en utilisant des signaux de référence externes délivrés sur les fils f3.1 à f3.16 à partir d'un circuit d'aiguillage AIG. En ce qui concerne l'action de chaque signal de référence externe sur la file du circuit d'entrée correspondant, on se reportera à la Fig. 2 du document FR-A-2 538 976 et au texte qui l'a décrite. On retiendra que chaque sortie f3.1 à f3.16 impose le moment de lecture du premier octet de paquet dans la file correspondante, c'est-à-dire le moment de lecture de l'étiquette.

La matrice de commutation comprend encore une base de temps BT, un circuit d'aiguillage et de conversion d'étiquette ACE, une matrice de rotation d'entrée MRE, des mémoires tampons M0 et M1 à M16, une matrice de rotation de sortie MRS, des files de sorties MS1 à MS16, des convertisseurs parallèle/série p/s1 à p/s16, et des circuits annexes d'adressage et de commutation, qui apparaîtront dans la suite de la description.

La base de temps BT, dont le schéma est montré à la Fig. 4, est notamment prévue pour distribuer les signaux d'horloge de lecture HL1 à HL16 aux files des circuits d'entrée CE1 à CE16. La base de temps BT, Fig. 2, comprend un compteur binaire CTS à dix étages à l'entrée duquel est appliqué un signal d'horloge de fréquence 4H, étant entendu que 1/H représente un temps d'octet pour chacun des multiplex entrants ou sortants. La première sortie 2H délivre un signal à la fréquence 2H, la seconde sortie H délivre un signal à la fréquence octet H, les quatre sorties suivantes sont groupées pour former une liaison e, les quatre dernières sorties, plus celles de la liaison e, sont groupées pour former la liaison K.

Les sorties 2H, H et e, c'est-à-dire les sorties transmettant le six bits de poids faible du compteur CTS, sont reliées aux entrées correspondantes d'un décodeur DECOD capable de décoder le mot 000000. La sortie du décodeur DECOD est reliée à l'entrée de validation de chargement L d'un registre à décalage REG à soixante-quatre bits. Le registre REG est rebouclé sur lui-même et a son entrée d'horloge de décalage qui reçoit le signal à la fréquence 4H. Aux entrées de chargement parallèle du registre REG, sont affectées les soixante-quatre valeurs binaires suivantes: 101010001000100010001000100010001000100 010001000100010001000

Le registre a seize sorties parallèles HL16 à HL1 qui sortent respectivement des étages 4x1, 4x2, ... , 4x16 et qui sont respectivement reliées aux entrées de lecture des circuits d'entrées CE1 à CE16.

Les sorties de données des circuits CE1 à CE16 sont respectivement reliées aux entrées C1 à C16 de la matrice de rotation d'entrée MRE, Fig. 2. La matrice de rotation d'entrée MRE, comme la matrice de rotation de sortie MRS, peut être constituée par des circuits connus en terminologie anglo-saxonne sous les noms de "Rotate matrix" ou "Shift matrix" commercialisées en technologie ECL 100K sous le n° 100158. Ces matrices peuvent être réalisées avec une commande associée aux entrées ou associée aux sorties. Dans le document FR-A-2 238 976, les matrices sont du type commandé par l'entrée. Dans le présent exemple de réalisation, la matrice d'entrée est du type à commande associée aux entrées, ce qui explique que, pour une suite d'adresses croissant régulièrement, une sortie de données se trouve reliée successivement aux entrées, pour chaque entrée l'indice étant celui de l'adresse croissante. Les sorties D1 à D16 de la matrice MRE sont respectivement reliées aux entrées des mémoires tampons M1 à M16.

Les sorties des circuits d'entrée CE1 à CE16 sont encore respectivement reliées aux entrées d'un multiplexeur MET à seize entrées, Fig. 1. La sortie à huit fils du multiplexeur MET est reliée, par l'intermédiaire d'un registre tampon RMA, aux huit premières entrées d'adresse d'une mémoire à accès aléatoire MC située dans le circuit d'aiguillage et de conversion d'étiquette ACE. Le registre RMA a pour fonction de présenter plus longtemps les données qui sont appliquées à ses entrées. Son rôle apparaîtra plus clairement dans la suite.

Le faisceau e à quatre fils, sortant du compteur CTS de la base de temps BT, transmet quatre bits et est relié à l'entrée de commande de l'aiguilleur AIG comportant les seize sorties f3.1 à f3.16. La rotation du compteur CTS se traduit par la circulation, à la fréquence H, d'un "1" sur les sorties f3.1 à f3.16. Les signaux successifs appliqués aux fils f3.1 à f3.16 en fonction de la sortie du compteur CTS font que les activations en lecture des circuits d'entrée CE1 à CE16 sont séquentielles. Le faisceau e est également relié à l'entrée de commande du multiplexeur MET si bien que des octets des paquets sortant des circuits d'entrée peuvent être transmis séquentiellement à la mémoire MC.

Quatre secondes entrées d'adresse de la mémoire MC sont également reliées au faisceau e, par l'intermédiaire du registre tampon RMA. Le faisceau e est encore relié à l'entrée de commande CDE assurant les décalages dans la matrice de rotation d'entrée MRE.

La liaison K à huit fils est reliée, d'une part, aux entrées E de deux multiplexeurs MX0 et MX1, d'autre part, aux entrées de données de files d'attente d'adresse de sortie FS1 à FS16 et, enfin, à l'entrée d'un additionneur +1, qui ajoute 1 à l'adresse qui lui est transmise. La sortie de l'additionneur +1 est reliée, en parallèle, par des liaisons à huit fils, aux entrées E de multiplexers MX2 à MX16. A noter que l'additionneur +1 n'est pas indispensable. Toutefois, il permet de maintenir la configuration oblique des paquets dans les mémoires M1 à M16, en compensant la période d'octet qui est utilisée pour analyser une étiquette dans le circuit ACE, Fig. 1.

La sortie de la mémoire MC est reliée par 24 fils à son registre de sortie R dont les huits premières sorties sont reliées par un liaison j à l'entrée de la mémoire tampon M0 et dont les 16 autres sorties sont reliées individuellement aux entrées de commande d'écritures des files FS1 à FS16. L'entrée d'horloge du registre R est reliée à la sortie d'horloge H.

La sortie de la mémoire M0 est reliée à l'entrée d'un démultiplexeur DET, Fig. 2, par l'intermédiaire d'un circuit de transfert CTR0, Fig. 1. Les sorties des mémoires M1 à M16 sont reliées à des circuits de transfert CTR1 à CTR16 dont les sorties sont respectivement reliées aux entrées F1 à F16 de la matrice de rotation de sortie MRS.

Le circuit de transfert CTR0, qui peut être identique au circuit de transfert montré à la Fig. 9 du document FR-A-2 538 976, comprend un multiplexeur à deux groupes de huit entrées dont le premier est relié à la sortie de la mémoire M0 et dont le second est relié à un groupe de potentiels correspondant à un mot binaire prédéterminé. La sortie du multiplexeur qui est la sortie du circuit de transfert CTR0 est reliée à l'entrée du démultiplexeur DET.

De même, le circuit de transfert CRT1 peut être identique au circuit de transfert montré à la Fig. 10 du document précité. Sa sortie est reliée à l'entrée F1. Les circuits de transfert CTR2 à CTR16 ont la même structure que le circuit de transfert CTR1.

Les entrées de commandes des circuits CTR0 à CTR16 sont respectivement reliées aux sorties correspondantes d'un registre RGV de seize bits, les circuits CTR0 et CTR1 ayant leurs entrées de commande reliée à une sortie commune de RGV. L'entrée de données du registre RGV est reliée à la sortie d'un multiplexeur MGS et son entrée d'horloge reçoit l'horloge H. Le multiplexeur MGS a seize entrées qui sont respectivement reliées aux fils de sortie "File vide" des files FS1 à FS16. L'entrée de commande de MGS est reliée à la liaison e inversée.

Les sorties G1 à G16 de la matrice MRS sont respectivement reliées aux premières entrées de multiplexeurs MXS1 à MXS16 dont les secondes entrées sont respectivement reliées aux seize sorties du démultiplexeur DET et dont les entrées de commande reçoivent le signal à la fréquence H. Les sorties des multiplexeurs MXS1 à MXS16 sont respectivement reliées aux jonctions de sortie S1 à S16, par des files MS1 à MS16 et des convertisseurs p/s1 à p/s16, dans chaque cas une file étant en série avec un convertisseur. Les entrées d'horloge d'écriture HE1 à HE16 des files MS1 à MS16 sont respectivement reliées aux sorties HL1 à HL16 de la base de temps BT.

L'entrée de commande de décalage CDE de la matrice MRS reçoit l'information de la liaison e après inversion de chacun des bits dans des (quatre) inverseurs INV. La sortie des inverseurs INV est aussi reliée, d'une part, à un démultiplexeur TR et, d'autre part, à l'entrée de commande d'un multiplexeur MFS. Le démultiplexeur TR a seize sorties individuelles reliées par des fils individuels aux entrées de commande de lecture des files FS1 à FS16. Le démultiplexeur TR effectue le décodage du complément du nombre binaire transmis par e en un ordre de lecture délivré sur le fil approprié pour déclencher la lecture d'une adresse dans une des files FS1 à FS16.

Les sorties de données des files d'adresses FS1 à FS16, sont reliées par seize liaisons LS1 à LS16, à huit fils chacune, aux entrées correspondantes du multiplexeur MFS. La sortie à huit fils du multiplexeur MFS est reliée à l'entrée d'un compteur-registre ADL1. La sortie à huit fils du compteur-registre ADL1 est reliée, d'une part, en parallèle aux entrées L des multiplexeurs MX0 et MX1 et, d'autre part, à l'entrée d'un compteur-registre ADL2. La sortie à huit fils du compteur-registre ADL2 est reliée, d'une part, à l'entrée L du multiplexeur MX2 et, d'autre part, à l'entrée d'un compteur-registre suivant ADL3, et ainsi de suite jusqu'à un compteur-registre ADL16.

Les compteurs-registres ADL1 à ADL16 ont chacun leur entrée de sélection de fonction comptage ou chargement reliée à la sortie d'horloge H et leur entrée d'activation de la fonction sélectionnée reliée à la sortie d'horloge 2H.

Les sorties à huit fils des multiplexeurs MX0 à MX16 sont respectivement reliées aux entrées d'adresse des mémoires M0 à M16. Les entrées de commande écriture-lecture E/L des multiplexeurs MX0 à MX16 sont reliées à la sortie d'horloge H, permettant de choisir entre le groupe associé à l'entrée E, porteur des adresses d'écriture, et le groupe associé à l'entrée L, porteur des adresses de lecture.

Enfin, l'entrée de commande du démultiplexeur DET est reliée à la liaison e par les inverseurs INV. Le démultiplexeur DET comporte seize sorties à huit fils qui sont respectivement reliées aux secondes entrées des multiplexeurs MXS1 à MXS16, leur sélection étant fonction du signal appliqué à l'entrée de commande du démultiplexeur DET.

On va maintenant décrire le fonctionnement du système de commutation des Figs. 1 et 2, sachant que le rôle de chacun des circuits d'entrée CE1 à CE16 a déjà été décrit.

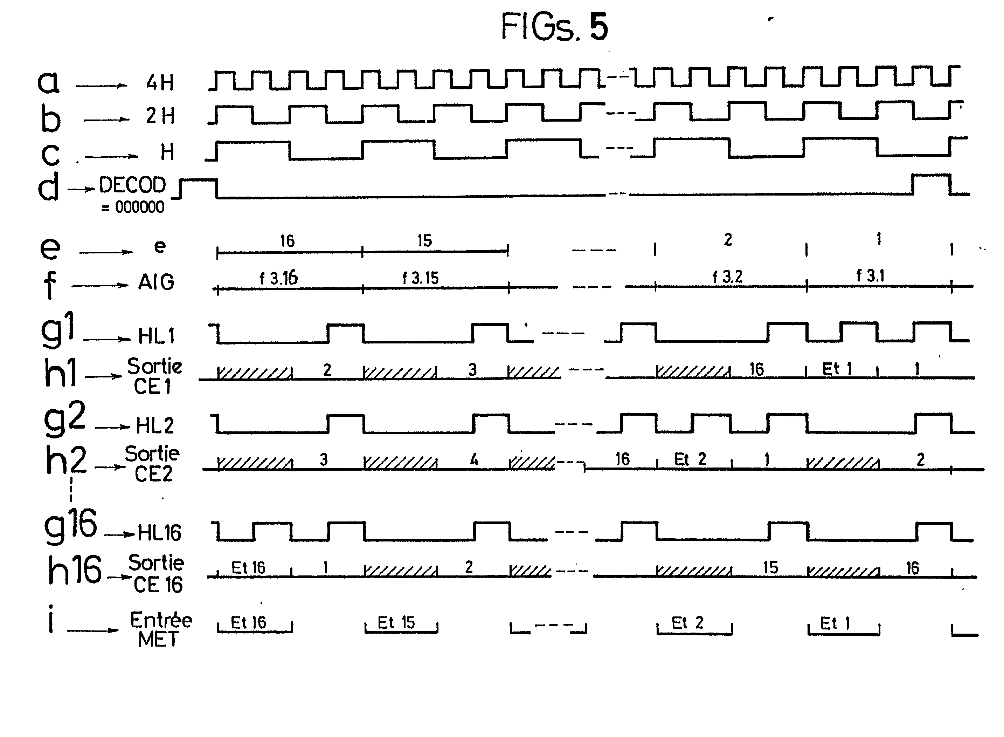

Le diagramme de la Fig. 5a représente le signal d'horloge à la fréquence 4H, qui est émis par le circuit d'horloge portant la référence 4H. Les diagrammes 5b et 5c représentent les signaux de sortie des deux premières sorties du compteur CTS, c'est-à-dire les signaux dont les fréquences sont 2H et H, respectivement. Le diagramme de la Fig. 5d représente le signal de sortie du décodeur DECOD.

On a représenté à la Fig. 5e la succession des nombres transmis par la liaison à quatre fils e. A la Fig. 5f, on a mentionné la succession des signaux sur les fils de sortie de l'aiguilleur AIG qui sont activés en fonction des nombres transmis par la liaison e.

Les Figs. 5g1, 5g2, ... , et 5g16 représentent les autres signaux de sortie de la base de temps BT. A la Fig. 5g1, on a représenté le signal d'horloge de lecture HL1 appliqué à la file du circuit d'entrée CE1. A la Fig. 5h1, on a représenté les paquets sortant du circuit CE1, l'ordre des mots étant mentionné. A la Fig. 5g2, on a représenté le signal d'horloge de lecture HL2 appliqué à la file du circuit d'entrée CE2. A la Fig. 5h2, on a représenté les paquets sortant du cirucit CE2, l'ordre des mots étant mentionné. A la Fig. 5g16, on a représenté le signal d'horloge de lecture HL16 appliqué à la file du circuit d'entrée CE16. A la Fig. 5h16, on représente les paquets sortant du circuit CE16, l'ordre des mots étant mentionné.

Il apparaît que chaque cycle d'horloge de lecture est dérivé d'un cycle à soixante-quatre temps élémentaires dont seuls dix-sept sont utilisés. En pratique, au début de chaque sortie de paquet, on a deux instants de lecture séparés par un temps élémentaire tandis qu'ensuite les instants de lecture sont séparés par trois temps élémentaires. Par ailleurs, les cycles sont successivement décalés de quatre temps élémentaires. L'examen des Figs. 5h1 à 5h16 montre qu'avec de tels cycles de lecture, la structure des paquets délivrés par les circuits d'entrée CE1 à CE16, est une structure diagonale analogue à celle qui est montrée à la Fig. 5 du document FR-A-2 538 976 déjà mentionné.

Le multiplexeur MET a ses entrées successivement activées par les nombres transmis par la liaison e. Par ailleurs, les instants d'écriture dans le registre mémoire sont représentés à la Fig. 5i. Il apparaît que ces instants sont choisis pour que le multiplexeur MET transmette successivement les étiquettes des voies 1 à 16 vers le registre RMA. Les autres circuits de l'ensemble d'aiguillage et de conversion d'étiquette ACE fonctionnant avec une horloge H à seize temps élémentaires, chacun ayant une durée double des horloges de lecture des circuits d'entrée. Le registre mémoire RMA reçoit successivement les étiquettes et les présente à la mémoire MC pendant la durée complète d'un temps élémentaire de l'horloge H.

Les adresses de rotation de la matrice de rotation d'entrée MRE sont déterminées par le faisceau e et permettent les écritures des mots des paquets, mais non des étiquettes. Une fois décalées, les sorties D1 à D16 vont respectivement délivrer les mots 1 à 16 des paquets suivant la configuration montrée à la Fig. 7. Ainsi, la sortie D1 applique à la mémoire M1 tous les mots 1, la sortie D2 applique à la mémoire M2 tous les mots 2, etc. Les mémoires M1 à M16, prévues pour enregistrer 16x16 champs de paquet sont adressées sur huit fils.

Quand le registre mémoire RMA présente à sa sortie l'étiquette i, la mémoire MC reçoit également le rang de la jonction d'entrée concernée par la liaison e.

La mémoire MC, adressée par e et i, si l'on appelle i une étiquette courante délivrée par le multiplexeur MET, délivre la nouvelle étiquette j et l'identification d'une ou de plusieurs jonctions de sortie adéquates parmi les jonctions de sortie S1 à S16. Au même instant, le compteur CTS délivre un nombre parmi 2⁸, qui représente l'adresse Adi à laquelle l'étiquette j doit être écrite dans la mémoire M0. Egalement, au même instant, cette adresse Adi est introduite dans chaque file FS1 à FS16 qui est désignée par la valeur s de la sortie du registre R de la mémoire MC. Encore, au même instant, l'étiquette j est écrite dans la mémoire M0.

Par ailleurs, le faisceau K est également relié à l'entrée E du multiplexeur MX1 servant à adresser la mémoire M1, c'est-à-dire l'adresse à laquelle le premier mot du paquet suivant une étiquette doit être écrit dans la mémoire M1. L'écriture a lieu dans le même temps. Le rôle de l'additionneur +1 a déjà été décrit. Les octets 2 à 15 du paquet de nouvelle étiquette j sont ensuite successivement écrits dans les mémoires correspondantes M2 à M16, la configuration oblique de la Fig. 7 étant respectée.

Il faut noter que les mémoires M0 à M16 sont prévues pour enregistrer 16x16 paquets ce qui explique leur adressage sur huit fils.

Par l'intermédiaire de la liaison e et du démultiplexeur TR, la base de temps explore cycliquement les seize files FS1 à FS16. L'information sur la liaison e sert également à sélecter l'entrée du multiplexeur MFS qui est reliée a la file d'attente sélectée par le démultiplexeur TR. Les inverseurs INV, situés en amont, d'une part, de l'entrée CDE de la matrice de rotation de sortie MRS et, d'autre part, de l'entrée de commande du démultiplexeur DET, ont pour but d'assurer un fonctionnement de cette matrice en sens inverse de la matrice d'entrée MRE, d'une part, et du multiplexeur MET, d'autre part.

Pendant la première moitié du temps octet, l'adresse Adi de l'étiquette d'un paquet est transmise au compteur-registre ADL1 dont la sortie adresse, par MX0 et MX1 respectivement, les mémoires M0 et M1 en lecture. Pendant la seconde moitié du temps octet, le contenu du registre ADL1 est incrémenté de 1. Au temps octet suivant, le compteur-registre ADL1 transmet son contenu au compteur-registre ADL2 et reçoit de MFS une nouvelle adresse trouvée dans la file d'attente suivante. Donc, à cet instant, le contenu du registre ADL2 est capable, pendant la première moitié du temps octet, d'adresser la mémoire M2 en lecture, à travers MX2, c'est-à-dire de lire le second octet du paquet. Pendant la seconde moitié du temps octet, le compteur-registre ADL2 est incrémenté de 1, ce qui va permettre par ADL3 de lire l'octet 3 au temps suivant, etc. Il apparaît donc que les octets d'un paquet sont lus simultanément dans les mémoires M0 et M1, puis en succession dans les mémoires M2 à M16 où ils occupent des adresses variant de Adi à Ad(i+15). Par ailleurs, l'information de commande de la matrice de rotation de sortie MRS variant à chaque temps d'octet, les octets "1" à "16" d'un paquet sont successivement délivrés sur la sortie Gs correspondant à la file sélectionnée par le démultiplexeur TR.

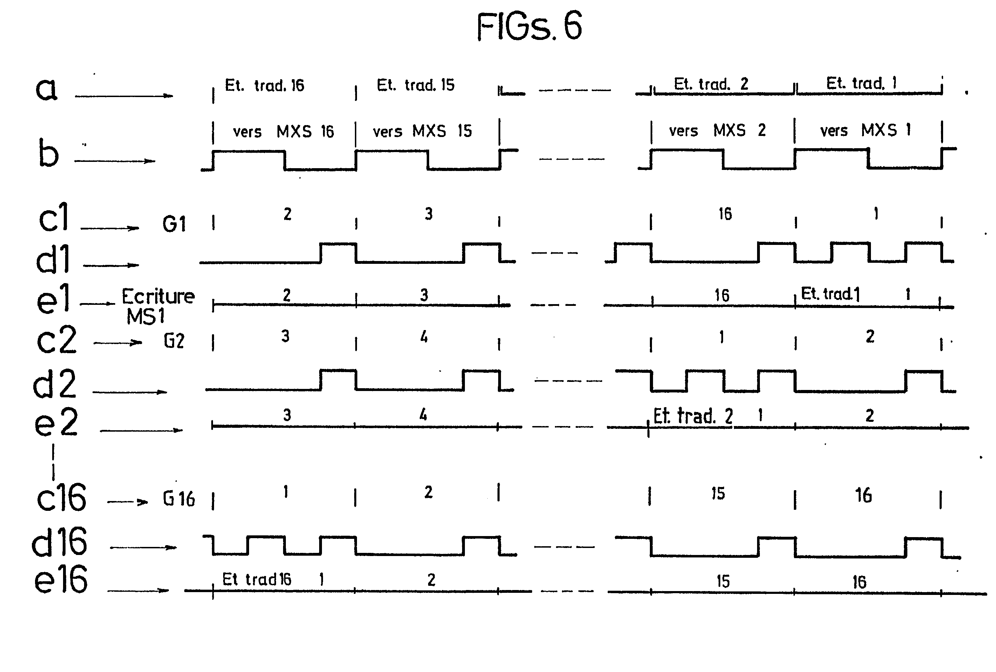

On va maintenant décrire, en relation avec les Figs. 6a à 6e, comment l'étiquette sortant du démultiplexeur DET et les octets suivants du paquet sont écrits dans la file de mémoire MSs parmi les files MS1 à MS16, par l'intermédiaire des multiplexeurs MXS1 à MXS16.

La Fig. 6a montre la suite des étiquettes traduites délivrées par la mémoire M0 et respectivement destinées aux canaux de sortie S1 à S16. Ainsi, l'étiquette traduite n° 1 est destinée à un paquet appliqué au canal S1, etc. La Fig. 6b montre le signal de fréquence H qui est appliqué aux entrées de commande des multiplexeurs MXS1 à MXS16. La Fig. $6c_1$ montre la suite des mots délivrés par la sortie G1 de la matrice MRS. Etant donné que le signal de commande du multiplexeur MXS1 est le signal de la Fig. 6b, on comprend qu'à chaque temps d'octet, le multiplexeur MXS1 laisse passer, pendant un demi-temps le mot appliqué par DET et dans l'autre demi-temps le mot sortant de G1. Donc dans le temp indiqué par "Etiquette traduite 1" à la Fig. 6a, MXS1 laisse passer cette étiquette vers la file MS1, puis le mot 1 provenant de G1. Dans les temps suivants, seuls les mots provenant de G1 sont appliqués pendant les second demi-temps à la file MS1. Par ailleurs, la Fig. $6d_1$ montre le signal d'écriture dans la file MS1. Il apparaît que tous les mots, plus l'étiquette sont écrits dans la file comme le montre la Fig. 6e1. Le fonctionnement qui vient d'être décrit vaut pour les écritures dans les autres files MS2 à MS16, comme le montrent les Figs. $6c_2$, $6d_2$, $6e_2$, … , $6c_{16}$, $6d_{16}$ et $6e_{16}$.

Les signaux des Figs. $6d_1$ à $6d_{16}$ sont évidemment fournis par le registre REG de la base de temps BT.

La mémoire MC de commande est une mémoire à accès aléatoire RAM 4Kx24 programmée par l'extérieur par une unité de commande UCC. Comme on l'a vu, elle affecte à chaque voie logique d'un multiplex entrant une nouvelle étiquette correspondant au multiplex sortant ou aux multiplex sortants dont la ou les files FSi seront parallèlement activées en écriture en fonction de l'état des 16 fils de sortie de la mémoire de commande. L'adresse du premier octet du paquet en cause, pointé par la base de temps BT par la liaison K, est rangée dans la ou les files Fi activées. Il apparaît ainsi que la matrice de commutation de l'invention peut, non seulement transmettre point à point des paquets, mais encore permet de les diffuser.

Lorsqu'elles sont vides, les files FS1 à FS16 présentent en sortie de données la valeur 0. Cela signifie qu'aucun paquet ne devra être envoyé sur le multiplex correspondant ou ce qui revient au même que le paquet transmis devra avoir une étiquette nulle, si l'on désire, comme on l'a mentionné dans le préambule, utiliser le mode de synchronisation décrit dans le document EP-A-0 108 028. Quand le fil de sortie "file vide" d'une file Fsi, validée par le démultiplexeur TR, est à "1" indiquant que la file est vide, le signal "1" apparaît à la sortie du multiplexeur MGS si bien que le premier fil de sortie du registre RGV est à 1 orientant le multiplexeur de CTR0 vers

le potentiel de bit "0". Ainsi, CTR0 délivre un octet nul à l'entrée du démultiplexeur DET. Par ailleurs, le premier fil de sortie du registre RGV à 1 oriente le multiplexeur de CTR1 vers des potentiels alternés de bits "1" et "0". Le circuit CTR1 délivre alors un octet de "1" et "0" à l'entrée F1. Au temps suivant de l'horloge H, le bit "1" de RGV a progressé d'un pas et oriente les multiplexeurs du circuit CTR2, respectivement vers les potentiels de bits "1" et "0". Il délivre un octet de "1" et de "0" alternés à l'entrée F2, et ainsi de suite aux temps d'horloge suivants jusqu'au circuit de transfert CTR16. Ainsi se trouve constitué un paquet à étiquette nulle, suivie d'une alternance de "1" et de "0".

Il doit être bien entendu que l'étiquette et le contenu d'un paquet vide peuvent avoit une autre structure que celle qui vient d'être utilisée, à titre d'exemple, pour illustrer le fonctionnement de la matrice de commutation.

Il doit être également entendu que plusieurs matrices de commutation, telles que celles qui viennent d'être décrites peuvent être utilisées pour constituer des étages de commutation ou des concentrateurs, comme on l'a décrit dans le document FR-A-2 538 976.

## Revendications

1) Système de commutation de multiplex à intervalles de temps contenant des paquets de longueur fixe provenant d'une pluralité de n jonctions entrantes (E1, E2, …, E16) vers une pluralité de n jonctions sortantes (S1, S2, …, S16), chaque paquet entrant ou sortant comportant un en-tête plus n mots, le système comprenant:
- des premiers moyens de conversion (CE1, …, CE16) transformant les paquets série d'une pluralité de multiplex entrants, en paquets parallèles,
- des moyens (MET) pour transmettre, aux entrées d'adresse d'une mémoire de commande, programmable à accès aléatoire (MC), l'en-tête et l'identification de la jonction entrante d'origine de chaque paquet entrant, la sortie de données de ladite mémoire de commande (MC) délivrant un nouvel en-tête traduit affecté au paquet entrant parallèle en substitution de l'en-tête d'origine de manière à former, avec les n mots restants du paquet entrant, le paquet parallèle sortant,
- une mémoire tampon (M0, M1, …, M16) activée cycliquement en écriture, pour mémoriser les paquets sortants,
- des seconds moyens de conversion (CTR1, …, CTR16) transformant chaque paquet parallèle sortant, lu dans la mémoire tampon, en un paquet série affecté au(x) multiplex destinataire(s),
- une pluralité de moyens (FS1, …, FS16) pour mémoriser les adresses des paquets qui sont présents dans la mémoire tampon (M0, M1, …, M16), lesdits moyens étant validés sélectivement en écriture, en fonction d'une information fournie également par d'autres sorties de données de la mémoire de commande, chacun des moyens de mémorisation étant affecté de manière univoque à une jonction sortante, et
- des moyens (ADL1, …, ADL16) sensibles à un signal indiquant l'activation d'une quelconque des jonctions sortantes pour lire l'adresse contenue dans le moyen de mémorisation correspondant, de manière à retrouver, dans la mémoire tampon, le paquet sortant destiné à ladite jonction, caractérisé en ce qu'il comporte encore:

- une base de temps (BT) fonctionnant à un rythme double du débit mot des multiplex et délivrant n trames cycliques de 2n intervalles de temps chacune, chaque trame étant décalée de deux intervalles de temps par rapport à la précédente, chaque jonction entrante étant associée à une trame cyclique parmi n et chaque jonction sortante étant associée à une trame cyclique parmi n, le premier temps de chaque trame validant les moyens pour transmettre l'en-tête de la jonction entrante associée aux entrées d'adresse de la mémoire de commande (MC) dont la sortie de données est reliée à la première mémoire élémentaire (M0) de la mémoire tampon, les intervalles de temps suivants de rangs pairs validant successivement les entrées des n dernières mémoires élémentaires (M1 à M16) de la mémoire tampon, le premier intervalle de temps d'une trame validant la liaison entre la sortie de la première mémoire élémentaire (M0) et les seconds moyens de conversion vers la jonction sortante associée à ladite trame et les intervalles de temps suivants de rangs pairs validant les liaisons entre les sorties des n dernières mémoires et les seconds moyens de conversion vers ladite jonction sortante associée.

2) Système de commutation suivant la revendication 1, caractérisé en ce que la base de temps (BT) est formée d'un compteur binaire cyclique à (K + 2) étages, où $2^K$ représente les adresses de paquets de la mémoire tampon et où k est supérieur au logarithme du nombre de jonctions entrantes ou sortantes ($e = \log_2 n$), l'entrée d'horloge du compteur (CTS) étant reliée à une horloge fonctionnant à quatre fois le rythme de débit mot des multiplex, les deux premiers étages délivrant les fréquences à la fréquence double du rythme mot et à la fréquence du rythme mot, les e étages suivants délivrant successivement les identifications des jonctions entrantes et sortantes, les sorties des (e+2) premiers étages aux entrées d'un décodeur de valeur nulle (DECOD) dont la sortie est reliée à l'entrée d'initialisation d'un registre à décalage (REG) dont l'entrée d'horloge est reliée à l'horloge dont les entrées de chargement sont reliées à une série de potentiels logiques représentant la séquence binaire 1010100010001...01000, la sortie du dernier étage du registre étant reliée à l'entrée de signal du premier, et les sorties des étages de rangs multiples de quatre délivrant les trames décalées.

3) Système de commutation selon la revendication 1 ou 2, caractérisé en ce que les premiers moyens de conversion (CE1, ..., CE16) comprennent un circuit d'entrée à file d'alignement par jonction entrante, les files d'alignement ayant leurs entrées de référence reliées respectivement aux sorties d'un démultiplexeur (AIG) dont l'entrée est reliée aux étages d'identification (e) du compteur (CTS) de la base de temps, les entrées de lecture des files d'alignement étant respectivement reliées aux sorties de trame du registre (REG) de la base de temps (BT).

4) Système de commutation suivant l'une des revendications 1 à 3, caractérisé en ce que les sorties des moyens de conversion d'entrée (CE1, ..., CE16) sont, d'une part, reliées aux entrées d'une matrice de rotation (MRE) à n pas de rotation, n sorties et n entrées, et, d'autre part, aux entrées d'un multiplexeur (MET) à n entrées et une sortie qui est reliée à des entrées d'adresse de la mémoire de commande (MC), l'entrée de commande du multiplexeur (MET) et de la matrice de rotation étant reliées aux étages d'identification du compteur (CTS) de la base de temps et l'entrée de validation du multiplexeur (MET) étant reliée au premier étage du compteur (CTS).

5) Système de commutation suivant l'une des revendications 1 à 4, caractérisé en ce que la sortie de données de la mémoire de commande (MC) comporte autant de fils que de bits par en-tête et n fils respectivement reliés aux entrées d'écriture de n files d'adresses correspondant respectivement aux n jonctions sortantes, les entrées de données des files d'adresses étant reliées aux étages du compteur (CTS).

6) Système de commutation suivant l'une des revendications 1 à 5, caractérisé en ce que la sortie de la première mémoire élémentaire (M0) de la mémoire tampon est reliée à un démultiplexeur (DET) dont les sorties sont reliées aux premières entrées de n multiplexeurs (MXS1 à MXS16) dont les secondes entrées sont reliées aux sorties d'une matrice de rotation à n pas de rotation, n sorties et n entrées, dont les entrées sont reliées aux sorties des dernières mémoires élémentaires (M1 à M16) de la mémoire tampon, les entrées de commande du démultiplexeur (DET) et de la matrice de rotation (MRS) étant reliées par des inverseurs aux étages d'identification du compteur (CTS) de la base de temps (BT), les entrées de commande des n multiplexeurs (MSX1 à MSX16) étant reliées au second étage du compteur (CTS) et leurs sorties respectivement reliées aux entrées de données de n files d'attente (MS1 à MS16) dont les entrées d'écritures sont respectivement reliées aux sorties de trames du registre (REG) de la base de temps (BT), les n files d'attente (FS1 à FS16) ayant leurs sorties respectivement reliées aux jonctions de sortie.

## Claims

1. A system of commutation of multiplexes at intervals of time containing packets of fixed length originating from a plurality of n incoming junctions (E1, E2, ..., E16) towards a plurality of n outgoing junctions (S1, S2, ..., S16) each incoming or outgoing packet having a heading plus n words, the system comprising:

    - first means MET for transmitting to the address inputs of a control memory programmable with aleatory access (MC), the heading and the identification of the incoming junction of origin of each incoming packet, the data output of the said control memory (MC) delivering a new translated heading allocated to the parallel incoming packet in substitution for the heading of origin so as to form with the remaining n words of the packet the parallel outgoing packet.
- a buffer memory (M0, M1, ..., M16) activated cyclically in writing to memorize the outgoing packets,
- second means of conversion (CTR1, CTR16) transforming each outgoing parallel packet read in the buffer memory in a series packet allocated to the addressee multiplexes,
- a plurality of means (FS1, ..., FS16) to memorize the addresses of the packets which are present in the buffer memory (M0, M1, ..., M16) the said means being validated selectively in writing as a function of an item of information likewise supplied by other data outputs of the control memory, each of the means of memorization being allocated in a univocal manner to an outgoing junction and
- means susceptible to a signal indicating the activation of any of the outgoing junctions in order to read the address contained in the corresponding means of memorization so as to find in the buffer memory the outgoing packet intended for the said junction, characterised in that it also comprises:
- a time-base (ni) operating at a rhythm double the word output of the multiplexes and delivering n cyclic frames of 2n time intervals each, each frame being shifted by two intervals of time in relation to the preceding one, each outgoing junction being associated with one cyclic frame among n and each outgoing junction being associated with one cyclic frame among n, the first time of each frame validating the means for transmitting the heading of the incoming junction associated with the address inputs of the control memory (MC) the data output of which is connected to the first elementary memory M0 of the buffer memory, the following intervals of time of even rows validating successively the inputs of the n last elementary memories (M1 to M16) of the buffer memory, the first interval of time of a frame validating the liaison between the output of the first elementary memory (M0) and the second conversion means towards the outgoing junction associated with the said frame and the following intervals of time of even rows validating the liaisons between the outputs of the n last memories and the second conversion means towards the said associated outgoing junction.

2. A system of commutation according to claim 1, characterised in that the time-base (BT) is formed by a cyclic binary counter with (K+2) stages where $2^k$ represents the addresses of packets of the buffer memory and where 2 is greater than the logarithm of the number of incoming or outgoing junctions ($e = \log_2 n$), the clock input of the counter (CTS) being connected to a clock operating at four times the word output rhythm of the multiplexes, the first two stages delivering the frequencies at the frequency double the word rhythm and at the frequency of the word rhythm, the following e stages delivering successively the identifications of the incoming and outgoing junctions, the outputs of the (e+2) first stages being at the inputs of a decoder of nil value (DECOD) the output of which is connected to the initialization input of a shift register (REG) the clock input of which is connected to the clock the charging inputs of which are connected to a series of logical potentials representing the binary sequence 1010100010001 ... 01000, the output of the last stage of the register being connected to the input of the first signal and the outputs of the stages of multiple rows of four delivering the shifted frames.

3. A system of commutation according to claim 1 or 2, characterised in that the first conversion means (CE1, CE16) comprise an input circuit with alignment file by incoming junction, the alignment files having their reference inputs connected respectively to the outputs of a demultiplexer (AIG) the input of which is connected to the identification stages (e) of the counter (CTS) of the time-base, the reading inputs of the alignment files being connected respectively to the frame outputs of the register (REG) of the time-base (BT).

4. A system of commutation according to one of the claims 1 to 3, characterised in that the outputs of the input conversion means (CE1, CE16) are, on the one hand, connected to the inputs of a rotation matrix (MRE) with n steps of rotation, n outputs and n inputs and on the other hand, to the inputs of a multiplexer (MET) with n inputs and one output which is connected to address inputs of the control memory (MC), the control input of the multiplexer (MET) and of the rotation matrix being connected to the identification stages of the counter (CTS) of the time-base and the validation input of the multiplexer (MET) being connected to the first stages of the counter (CTS).

5. A system of commutation according to one of the claims 1 to 4; characterised in that the data output of the control memory (MC) has as many wires as bits per heading and n wires respectively connected to the writing inputs of n address files corresponding respectively to the n leaving junctions, the data inputs of the address files being connected to the stages of the counter (CTS).

6. A system of commutation according to one of the claims 1 to 5, characterised in that the output of the first elementary memory (M0) of the buffer memory is connected to a demultiplexer (DET) the outputs of which are connected to the first inputs of n multiplexers (MXS1 to MXS16) the second inputs of which are connected to the outputs of a rotation matrix with n rotation steps, n outputs, n inputs, the inputs of which are connected to the outputs of the last elementary memories (M1 to M16) of the buffer memory, the control inputs of the demultiplexer (DET) and of the rotation matrix (MRS) being connected by inverters to the identification stages of the counter (CTS) of the time-base (BT), the control inputs of the n multiplexers (MXS1 to MXS16) being connected to the second stage of the counter (CTS) and thus outputs connected respectively to the data inputs of n waiting files (MS1 to MS16) the writing inputs are connected respectively to the frame outputs of the register (REG) of the time-base (BT), the n waiting files (FS1 to FS16) having their outputs connected respectively to the output junctions.

**Patentansprüche**

1. System zur Kommutierung von Multiplexen in Zeitabschnitten, welche Pakete vorgegebener Länge enthalten, die von einer Vielzahl von n Eingangsanschlüssen (E1, E2, ..., E6) stammen, zu einer Vielzahl von n Ausgangsanschlüssen (S1, S2, ..., S16), wobei jedes eingehende oder ausgehende Paket einen Kopf plus n Worte enthält und wobei das System enthält:
- erste Konversionsmittel (CE1 ... CE16), die die Serienpakete einer Vielzahl von Multiplexeingängen in parallele Pakete umwandeln,
- Mittel MET zur Übertragung des Kopfes und der Kennung des ursprünglichen Eingangsanschlusses von jedem eingehenden Paket zu den Adreßeingängen eines mit direktem Zugriff programmierbaren Steuerspeichers (MC), wobei der Datenausgang des Steuerspeichers (MC) einen neuen, übersetzten, dem parallelen eingehenden Paket zugeordneten Kopf anstelle des ursprünglichen Kopfes liefert, der mit den verbleibenden n Worten des eingehenden Pakets das parallele ausgehende Paket bildet,
- einen Pufferspeicher (M0, M1, ... M16), welcher zyklisch zum Einschreiben der ausgehenden Pakete zu deren Speicherung aktiviert wird,
- zweite Konversionsmittel (CTR1, CTR16), welche jedes im Pufferspeicher gelesene ausgehende parallele Paket in ein serielles Paket transformieren, das den Adressaten-Multiplexen zugeordnet ist,
- eine Vielzahl von Mitteln (FS1, ..., FS16) zum Speichern der Adressen der Pakete, die sich im Pufferspeicher (M0, M1, ..., M16) befinden, wobei diese Mittel selektiv zum Schreiben gültig gemacht werden, als eine Funktion einer Information, die ebenfalls von anderen Datenausgängen des Steuerspeichers geliefert wird, wobei jedes der Speichermittel in eindeutiger Weise einem Ausgangsanschluß zugeordnet ist und
- Mittel, die für ein die Aktivierung eines der Ausgangsanschlüsse anzeigendes Signal empfindlich sind, um die in den entsprechenden Speichermitteln enthaltene Adresse zu lesen, um im Pufferspeicher das für diesen Anschluß bestimmte Paket aufzufinden, dadurch gekennzeichnet, daß es außerdem enthält:
- eine Zeitbasis (ni), welche mit dem Zweifachen des Wortausgangs-Taktes der Multiplexe arbeitet, und welche n zyklische Rahmen mit jeweils 2n Zeitintervallen liefert, wobei jeder Rahmen um zwei Zeitintervalle gegenüber dem vorhergehenden verschoben ist, jeder Eingangsanschluß einem zyklischen Rahmen von n zugeordnet und jeder Ausgangsanschluß einem zyklischen Rahmen von n zugeordnet ist, das erste Zeitintervall eines jeden Rahmens die Mittel zur Übertragung des Kopfes des mit dem Adreßeingang des Steuerspeichers (MC) zusammenhängenden Eingangsanschlusses gültig macht, wobei der Datenausgang des Steuerspeichers (MC) mit dem ersten Elementarspeicher M0 des Pufferspeichers verbunden ist, wobei die folgenden Zeitintervalle gerader Reihen nacheinander die Eingänge der n letzten Elementarspeicher (M1 bis M16) des Pufferspeichers gültig machen, das erste Zeitintervall eines Rahmens die Verbindung zwischen dem Ausgang des ersten Elementarspeichers (M0) und dem zweiten, Konversionsmittel in Richtung des diesem Rahmen zugehörigen Ausgangsanschlusses gültig macht, und wobei die folgenden Zeitintervalle gerader Reihen die Verbindungen zwischen den Ausgängen der n letzten Speicher und der zweiten Konversionsmittel in Richtung auf den genannten zugehörigen Ausgangsanschluß gültig machen.

2. System zur Kommutierung nach Anspruch 1, dadurch gekennzeichnet, daß die Zeitbasis (BT) von einem zyklischen binären Zähler mit (K+2) Stufen gebildet wird, wobei $2^K$ die Paket-Adressen des Pufferspeichers darstellt und 2 größer ist als der Logarithmus der Anzahl der Eingangs- oder Ausgangsanschlüsse (e = $\log_2$ n), wobei der Takteingang des Zählers (CTS) mit einem mit dem vierfachen Wortausgabekopf der Multiplexe arbeitenden Taktgeber verbunden ist, wobei die ersten beiden Stufen die Frequenzen mit der doppelten Wortfrequenz und mit der Wortfrequenz liefern, wobei die folgenden e Stufen nacheinander die Kennungen der Eingangs- und Ausgangsanschlüsse liefern, wobei die Ausgänge der (e+2) ersten Stufen an den Eingängen eines Decoders mit dem Wert Null (DECOD) liegen, dessen Ausgang mit dem Initialisierungseingang eines Schieberegisters (REG) verbunden ist, dessen Takteingang mit dem Taktgeber verbunden ist, dessen Ladeeingänge mit einer Reihe von logischen Potentialen verbunden ist, die die Binärfolge 1010100010001 ... 01000 darstellen, wobei der Ausgang der letzten Stufe des Registers mit dem Signaleingang der ersten verbunden ist und die Ausgänge der Stufen der vielfachen Reihen von vier die verschobenen Rahmen liefern.

3. System zur Kommutierung nach Anspruch 1 oder 2, dadurch gekennzeichnet, daß die ersten Konversionsmittel (6E1, CE16) eine Eingangsschaltung mit Ausrichtungsdatei pro Eingangsanschluß enthalten, wobei die Ausrichtungsdateien an ihren Referenzeingängen jeweils mit den Ausgängen eines Demultiplexers (AIG) verbunden sind, dessen Eingang an die Identifikations-Stufen (e) des Zählers (CTS) der Zeitbasis angeschlossen ist, wobei die Leseeingänge der Ausrichtungsdateien jeweils mit den Rahmenausgängen des Registers (REG) der Zeitbasis (BT) verbunden sind.

4. System zur Kommutierung nach einem der Ansprüche 1 bis 3, dadurch gekennzeichnet, daß die Ausgänge der Eingangskonversionsmittel (CE1, CE16) einerseits mit den Eingängen einer Rotationsmatrix (MRE) mit n Rotationsschritten, n Ausgängen und n Eingängen und andererseits mit den Eingängen eines Multiplexers (MET) mit n Eingängen und einem Ausgang, welcher an Adreßeingänge des Steuerspeichers (MC) angeschlossen ist, verbunden sind, wobei der Steuereingang des Multiplexers (MET) und der Rotationsmatrix mit den Identifikations-Stufen des Zählers (CTS) der Zeitbasis verbunden sind und der Validationseingang des Multiplexers (MET) an die erste Stufe des Zählers (CTS) angeschlossen ist.

5. System zur Kommutierung nach einem der Ansprüche 1 bis 4, dadurch gekennzeichnet, daß der Dateneingang des Steuerspeichers (MC) so viele Anschlüsse aufweist wie der Kopf Bits enthält, und n Anschlüsse, die jeweils an die Schreibeingänge von n Adreßdateien angeschlossen sind, welche jeweils den n Ausgangsanschlüssen entsprechen, wobei die Dateneingänge der Adreßdateien an die Stufen des Zählers (CTS) angeschlossen sind.

6. System zur Kommutierung nach einem der Ansprüche 1 bis 5, dadurch gekennzeichnet, daß der Ausgang des ersten Elementarspeichers (M0) des Pufferspeichers mit einem Demultiplexer (DET) verbunden ist, dessen Ausgänge an die ersten Eingänge von n Multiplexern (MXS1 bis MXS16) angeschlossen sind, deren zweite Eingänge an die Ausgänge einer Rotationsmatrix mit n Rotationsschritten, n Ausgängen und n Eingängen angeschlossen sind, deren Eingänge an die Ausgänge der letzten Elementarspeicher (M1 bis M16) des Pufferspeichers angeschlossen sind, wobei die Steuereingänge des Demultiplexers (DET) und der Rotationsmatrix (MRS) über Inverter an die Indentifikationsstufen des Zählers (CTS) der Zeitbasis (BT) angeschlossen sind, die Steuereingänge der n Multiplexer (MXS1 bis MXS16) mit der zweiten Stufe des Zählers (CTS) und ihre Ausgänge jeweils mit den Dateneingängen von n Wartedaten (MS1 bis MS16) verbunden sind, deren Schreibeingänge jeweils an die Rahmenausgänge des Registers (REG) der Zeitbasis (BT) angeschlossen sind, wobei die n Wartedaten (FS1 bis FS16) mit ihren Ausgängen jeweils an die Ausgangsanschlüsse angeschlossen sind.

FIG.1

FIG. 2

EP 0 230 847 B1

EP 0 230 847 B1

# FIG. 4

# FIG. 7

# FIG. 3

adresses croissantes

FIGs. 5

# FIGs. 6

Et. trad. 16    Et. trad. 15    — — —    Et. trad. 2    Et. trad. 1

a

vers MXS 16    vers MXS 15    — — —    vers MXS 2    vers MXS 1

b

c1    G1    2    3    16    1

d1

e1    Ecriture    2    3    16    Et. trad.1    1
MS1

c2    G2    3    4    1    2

d2

e2    3    4    Et. trad. 2    1    2

c16    G16    1    2    15    16

d16

e16    Et trad16    1    2    15    16

EP 0 230 847 B1